# FASCICULE DE BREVET EUROPEEN

(11) **EP 1 019 266 B1**
(45) Date de publication et mention de la délivrance du brevet: **26.04.2006**
(21) Numéro de dépôt: 99936655.2
(22) Date de dépôt: 30.07.1999
(51) Int. Cl.: B60Q 1/04

(54) **SYSTEME OPTIQUE POUR VEHICULE AUTOMOBILE**
OPTISCHES SYSTEM FÜR KRAFTFAHRZEUGE
OPTICAL SYSTEM FOR MOTOR VEHICLE

(30) Priorité: 31.07.1998 FR 9809893; 27.10.1998 FR 9813433; 06.11.1998 FR 9814014
(43) Date de publication de la demande: 19.07.2000
(73) Titulaire: COMPAGNIE PLASTIC OMNIUM, 69007 Lyon (FR)
(72) Inventeur: CHERON, Hugues, F-01800 Bourg Saint-Christophe (FR); FAYT, Arnold, F-38000 Grenoble (FR); DELWAL, Fabien, F-01000 Bourg-en-Bresse (FR)
(74) Mandataire: Leszczynski, André
(86) Numéro de dépôt international: PCT/FR1999/001896
(87) Numéro de publication internationale: WO 2000/007844

(56) Documents cités:
- EP-A- 0 620 137
- DE-A- 3 802 104
- DE-A- 19 519 655
- DE-A- 19 615 026

## Description

La présente invention concerne un système optique pour véhicule automobile.

On sait que les optiques des véhicules automobiles sont des pièces onéreuses et particulièrement exposées aux checs du fait de leur emplacement sur les véhicules.

Cet inconvénient tient à deux facteurs inhérents aux optiques utilisées à ce jour.

D'une part, les optiques sont constituées par des ensembles autonomes comprenant un boîtier, un châssis, une ou plusieurs lampes montées sur le châssis et une vitre d'obturation placée devant les lampes pour fermer le châssis. Ces ensembles autonomes sont logés dans le véhicule sans considération de leur propre aptitude à se déformer, eu égard aux déformations de leur voisinage. Il en résulte que, dans certaines circonstances, les optiques ne supportent pas les variations dimensionnelles, même faibles, de leur proche environnement, et se brisent assez facilement.

Un système optique selon le préambule de la revendication 1 est connu de DE-A-38 02 104.

D'autre part, en ayant une constitution indépendante de leur environnement de fonctionnement, les optiques des véhicules automobiles ne bénéficient pas des complémentarités que pourraient leur offrir les pièces qui les entourent.

La présente invention vise à fournir un système optique simple et économique, qui résout notamment ces problèmes ainsi que d'autres qui apparaîtront dans la suite de la description.

La présente invention a pour objet un système d'éclairage pour véhicule automobile comportant un châssis apte à supporter au moins une lampe d'éclairage, un boîtier contenant le châssis et sa lampe, et une pièce de structure du véhicule, apte à supporter intérieurement des organes du véhicule et extérieurement des éléments de carrosserie du véhicule, caractérisé par le fait que le boîtier est partie intégrante de la pièce de structure, laquelle comporte à cet effet un logement en forme de cuve qui peut accueillir directement le châssis et sa lampe.

Dans un mode de réalisation particulier de l'invention, la pièce de structure est un quart-avant, au sens de la demande de brevet français FR-2 754 235.

De préférence, la pièce de structure est un noeud structurel du véhicule, c'est-à-dire qu'elle appartient à l'ossature d'ensemble du véhicule.

Ainsi, la pièce de structure peut relier un longeron supérieur, un longeron inférieur, la traverse chocs et la traverse supérieure qui supporte la serrure et la butée ou l'articulation du capot.

Dans un premier mode de réalisation de l'invention, le châssis supportant la ou les lampes est constitué par un cuvelage réfléchissant qui concentre les rayons lumineux issus des lampes.

Dans un deuxième mode de réalisation, le châssis se réduit à une simple platine, laquelle peut éventuellement supporter un cuvelage réfléchissant pour concentrer les rayons lumineux.

La platine est de préférence moulée d'un seul tenant, ce qui améliore sa fiabilité et sa solidité et évite l'apparition de jeux susceptibles d'entraîner un déréglage des lampes les unes par rapport aux autres.

Dans un mode de réalisation particulier de l'invention, le système d'éclairage comporte, entre le logement en forme de cuve et la carrosserie, ou entre le logement en forme de cuve et une vitre de protection placée devant le châssis supportant la lampe, un moyen d'étanchéité qui empêche les poussières, l'eau et toutes particules étrangères de pénétrer dans le logement en forme de cuve.

Selon une première variante, ce moyen d'étanchéité est constitué par un joint à écrasement, du type tube souple, positionné à la périphérie du bord avant de la cuve et s'appuyant contre la carrosserie ou contre la vitre.

Selon une deuxième variante, le moyen d'étanchéité est constitué par un soufflet qui enferme le bord avant du logement en forme de cuve et prolonge ce logement jusqu'à la carrosserie ou jusqu'à la vitre, contre laquelle le soufflet prend appui.

Dans le même mode de réalisation, il est avantageux que le logement en forme de cuve soit rendu étanche par rapport à l'extérieur du véhicule grâce à un bloc de mousse moulé qui remplace les joints connus en empêchant la pénétration de poussières, d'eau et de toutes particules étrangères tout en autorisant une circulation d'air qui est indispensable compte-tenu des variations thermiques importantes qui naissent au voisinage du système d'éclairage.

Ce bloc de mousse peut également assurer une fonction d'absorption d'énergie, notamment pour les chocs avec des piétons.

Le bloc de mousse peut se situer sous le logement en forme de cuve ou autour de celui-ci.

Dans un mode de réalisation particulier de l'invention, le châssis est monté sur la pièce de structure par des fixations fusibles qui, en cas de choc subi par le véhicule, sont aptes à libérer le châssis pour permettre le recul de ce dernier de façon à le soustraire aux contraintes résultant du choc susceptibles de l'endommager.

Dans une variante particulière de ce mode de réalisation, ces fixations fusibles sont constituées par des moyens d'encliquetage.

De tels moyens d'encliquetage présentent les avantages de faciliter le montage du châssis lors de l'assemblage du véhicule, d'être économiques à fabriquer et à monter et de permettre, en cas de recul du châssis, la remise en place de ce dernier sans nécessiter le remplacement des moyens de fixation.

Le châssis du système d'éclairage selon l'invention comporte avantageusement des moyens de réglage qui permettent de régler l'assiette et l'azimut des faisceaux lumineux issus des lampes.

A cet effet, le châssis peut être monté sur pivots ou sur rotules.

Dans un mode de réalisation préféré, le châssis comporte deux fixations-rotules dont l'une est fixe, tandis que l'autre est déplaçable d'avant en arrière, ce qui permet de faire pivoter le châssis autour d'un axe vertical pour régler l'azimut des faisceaux lumineux issus des lampes. Le réglage de l'assiette s'effectue par pivotement du châssis autour d'un axe sensiblement horizontal passant par ses deux rotules.

En choisissant des fixations-rotules dans lesquelles les parties mâles et femelles desdites fixations s'encliquettent les unes dans les autres, on obtient, en même temps que les moyens de réglage, des fixations fusibles au sens du précédent mode de réalisation.

Pour des raisons de coût, il est avantageux que les fixations du chassis sur la pièce de structure soient standardisées, de manière que différents chassis puissent être montés sur différentes pièces de structure. De plus, cette standardisation peut permettre que toute une famille de véhicules comporte les mêmes chassis, insérés dans des pièces de structures différentes.

Le châssis du système d'éclairage selon l'invention est de préférence prévu pour recevoir au moins deux lampes.

Ces deux lampes étant solidarisées par le châssis, on peut prévoir un seul système de réglage pour tout le bloc optique.

Dans un mode de réalisation particulier de l'invention, le système d'éclairage comporte une vitre protectrice séparée du châssis et assujettie à la carrosserie où à la pièce de structure, devant le châssis supportant les lampes.

Ce mode de réalisation présente l'avantage qu'en cas de choc subi par le véhicule, si la vitre protégeant les lampes du système d'éclairage vient à être endommagée, elle peut être remplacée indépendamment du reste du système d'éclairage, ce qui est économiquement avantageux.

En outre, la fixation directe, par exemple par collage, de la vitre sur la carrosserie, permet d'obtenir un accostage à jeu nul, lequel fournit une meilleure finition de la carrosserie, et ce, pour un prix de revient réduit.

En cas de collage, on obtient simultanément l'étanchéité du système d'éclairage par rapport au milieu extérieur au véhicule.

De plus, le fait de séparer la vitre du support des lampes d'éclairage offre de nouvelles possibilités de conception dans la forme et la disposition des optiques, en harmonie avec la forme et le style de la carrosserie du véhicule.

Dans une variante particulière, la vitre est assujettie à la carrosserie ou à la pièce de structure par une pièce intermédiaire qui comporte une partie fusible qui permet à la vitre, en cas de choc, de reculer par destruction de ladite pièce intermédiaire.

Dans une autre variante particulière, la vitre comporte des formes d'encliquetage qui coopèrent avec des formes correspondantes de la carrosserie et permettent l'encliquetage de la vitre sur la carrosserie.

Ainsi, la vitre peut être rapidement mise en place et fermement maintenue par des formes d'encliquetage particulièrement robustes car réalisées d'un seul tenant avec la vitre.

En outre, ce mode de fixation présente l'avantage d'être démontable.

Dans le but de mieux faire comprendre l'invention, on va en décrire maintenant des modes de réalisation donnés à titre d'exemples non limitatifs en référence au dessin annexé dans lequel :
- la figure 1 est une section suivant un plan vertical parallèle à la direction d'avancement du véhicule d'un système optique selon un premier mode de réalisation de l'invention,
- la figure 2 est une vue du détail II de la figure 1,
- la figure 3 est une vue analogue à la figure 1 d'un autre mode de réalisation de l'invention,
- la figure 4 est une vue du détail IV de la figure 3,
- la figure 5 est une vue en perspective de la partie avant droite d'un véhicule automobile pourvu d'un système optique très voisin de celui des figures 3 et 4, sans pièce de carrosserie,
- la figure 6 est une vue analogue à la figure 5 d'un pare-chocs qui est destiné à recouvrir la partie du véhicule représentée à la figure 5,
- la figure 7 est une vue en perspective de l'arrière du système optique de la figure 5,
- la figure 8 est une vue en coupe selon VIII-VIII de la figure 7,
- la figure 9 est une vue en perspective arrière d'une partie du système optique des figures 5 à 8,
- la figure 10 est une vue à plus grande échelle selon X de la figure 9,
- la figure 11 est une vue en perspective avant d'une partie du système optique des figures 5 à 10,
- la figure 12 est une vue à plus grande échelle de la partie XII de la figure la figure 11,
- la figure 13 est une vue selon XIII de la figure 12,
- la figure 14 est une vue à plus grande échelle de la partie XIV de la figure 5,
- la figure 15 est une vue en perspective arrière du même système optique monté sur le véhicule,
- la figure 16 est une vue analogue à la figure 15 après fermeture de la cuve recevant le système optique,
- la figure 17 est une vue analogue à la figure 16 après pose d'une mollette de réglage d'assiette,
- la figure 18 est une vue analogue aux figures 1 et 3 d'un autre mode de réalisation de l'invention,
- la figure 19 est une vue du détail XIX de la figure 18,
- la figure 20 est une vue en perspective arrière du système optique de la figure 18,
- la figure 21 est une vue en perspective avant du système optique de la figure 18,
- la figure 22 une vue analogue aux figures 1, 3 et 18 d'un autre mode de réalisation de l'invention,
- la figure 23 est une vue à plus grande échelle de la partie XXIII de la figure 22,
- la figure 24 est une vue à plus grande échelle de la partie XXIV de la figure 22,
- la figure 25 une vue analogue aux figures 1, 3, 18 et 22 d'un autre mode de réalisation de l'invention,
- la figure 26 est une vue à plus grande échelle de la partie XXVI de la figure 25, et
- la figure 27 est une vue à plus grande échelle de la partie XXVII de la figure 25.

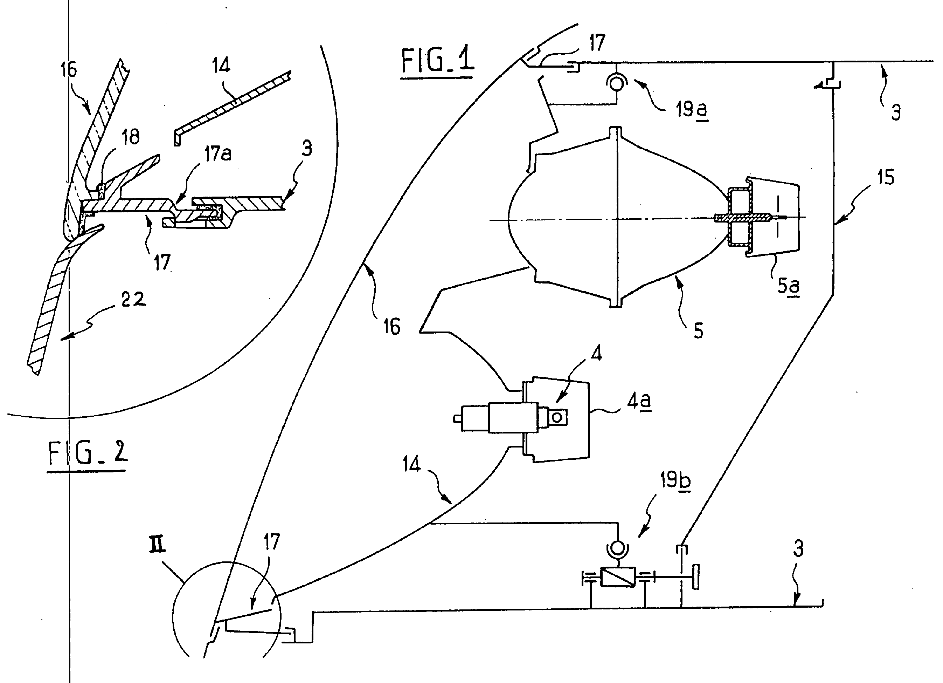

Dans le mode de réalisation des figures 1 et 2, le châssis du système optique est constitué par un cuvelage réfléchissant 14 qui est monté par des fixations fusibles 19a, 19b sur la structure du véhicule, laquelle structure est un quart-avant 3 tel que décrit dans le brevet français de la déposante publié sous le n°2 754 235.

Des lampes 4,5 montées sur le cuvelage réfléchissant 14 sont un projecteur lenticulaire 5 et un projecteur parabolique à surface complexe 4.

Le cuvelage réfléchissant 14 forme la surface parabolique complexe de la lampe 4 et entoure l'autre lampe 5.

La lampe 4 est ici protégée par un capot 4a, et la lampe 5 par un capot 5a.

L'arrière du système optique est obturé par une paroi 15 encliquetée sur le quart-avant 3.

Une vitre d'optique 16 obturant le système optique est montée sur le quart-avant 3 grâce à une pièce intermédiaire 17 qui est collée par un cordon de colle 18 à la périphérie de la vitre et qui s'encliquette sur une forme correspondante du quart-avant.

Cette pièce intermédiaire 17 comporte un rétrécissement de section 17a qui la rend fusible de sorte qu'en cas de choc, la vitre 16 peut reculer à l'intérieur du véhicule après destruction de la pièce intermédiaire 17.

En cas de faible déformation, la vitre recule sans se briser et sans atteindre le reste du système optique qui demeure en place.

En cas de choc plus important, la vitre et le châssis reculent vers l'intérieur du véhicule, chacun grâce à la destruction des fixations fusibles 19a, 19b.

Ces dernières sont, l'une 19a fixe, l'autre 19b réglable, comme on le verra ultérieurement.

Dans ce mode de réalisation, la peau du pare-chocs 22 est recouverte par le bord extérieur de la vitre 16 mais l'aptitude à la déformation du pare-chocs ne gêne pas le recul de la vitre lorsque cela est nécessaire.

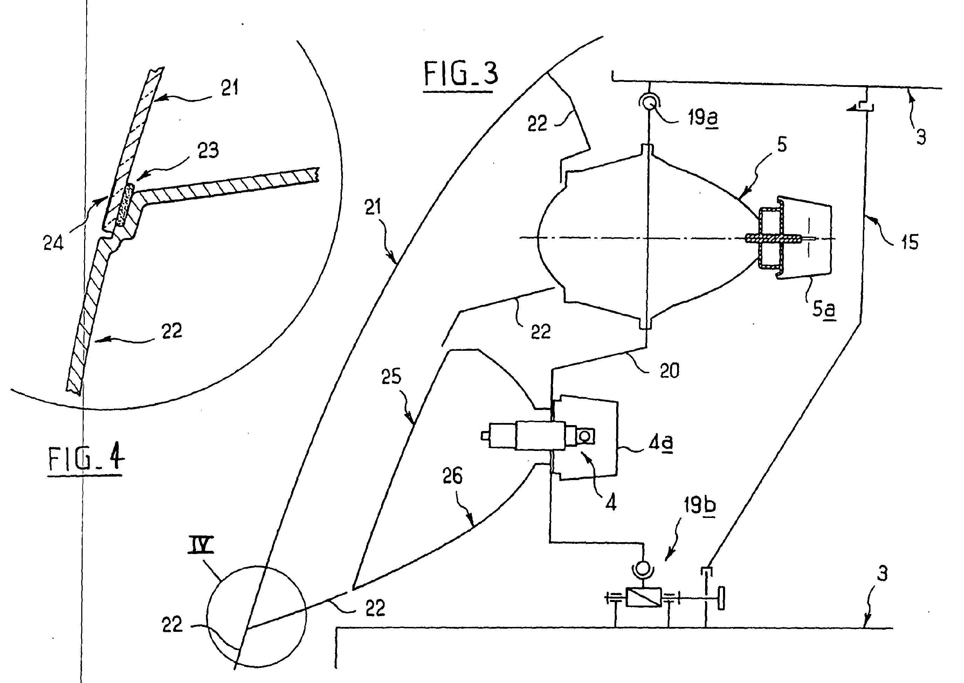

Les figures 3 et 4 montrent un mode de réalisation dans lequel le châssis se limite à une platine 20 supportant les deux lampes 4 et 5. La platine 20 est supportée par une fixation fixe 19a et une fixation réglable 19b comme précédemment. L'arrière du système optique est obturé par une paroi 15 encliquetée sur la structure du véhicule (quart-avant 3).

L'obturation avant est assurée par une vitre d'optique 21 qui est collée directement sur la peau du pare-chocs, une sérigraphie 24 étant réalisée à la périphérie de la vitre pour dissimuler le cordon de colle 23 qui maintient la vitre sur le pare-chocs.

Pour garantir l'étanchéité de la lampe 4 à surface parabolique complexe, une seconde vitre 25 est prévue sur le cuvelage parabolique 26 entourant la lampe. Ce cuvelage 26 est supporté directement par la platine 20.

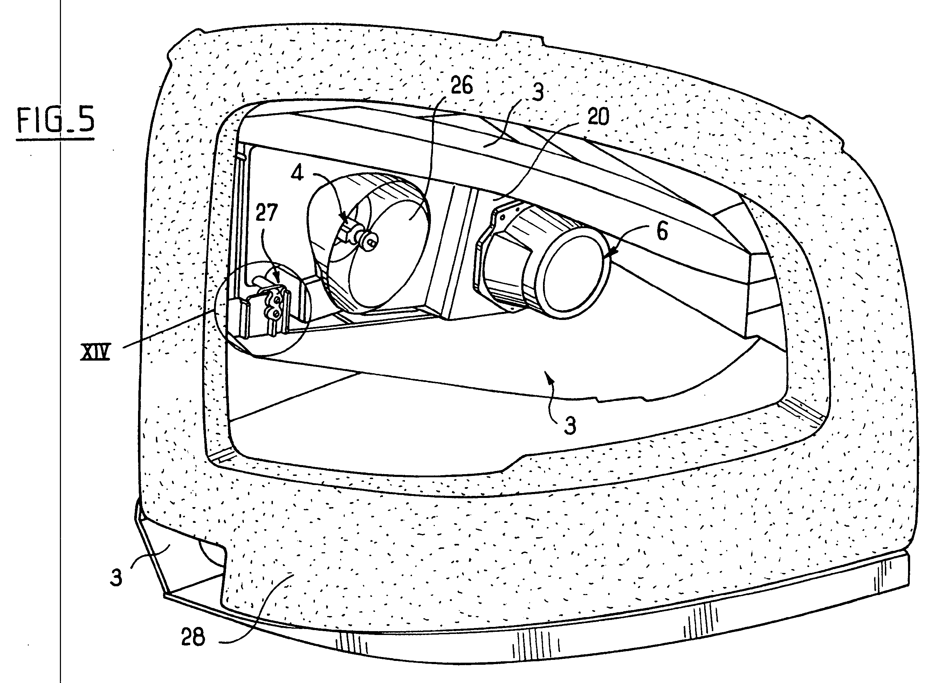

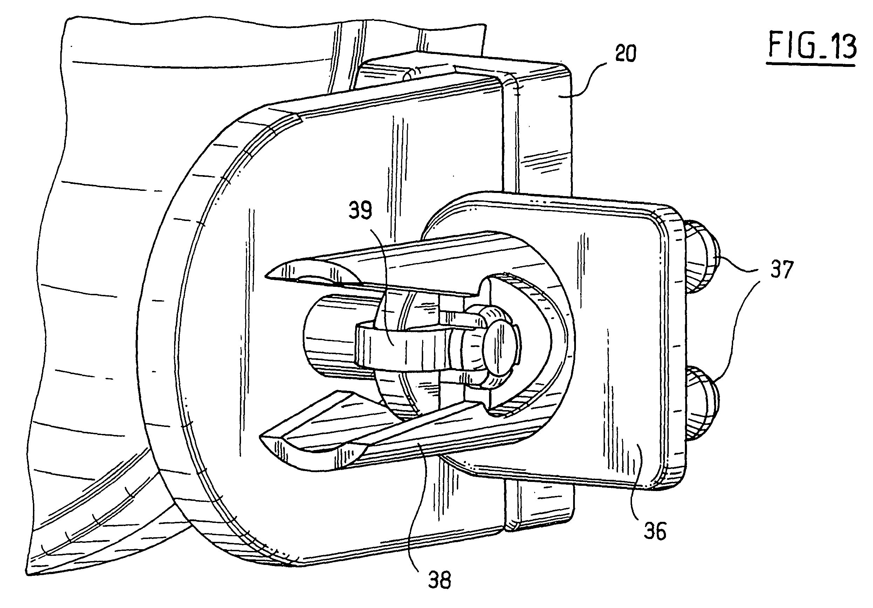

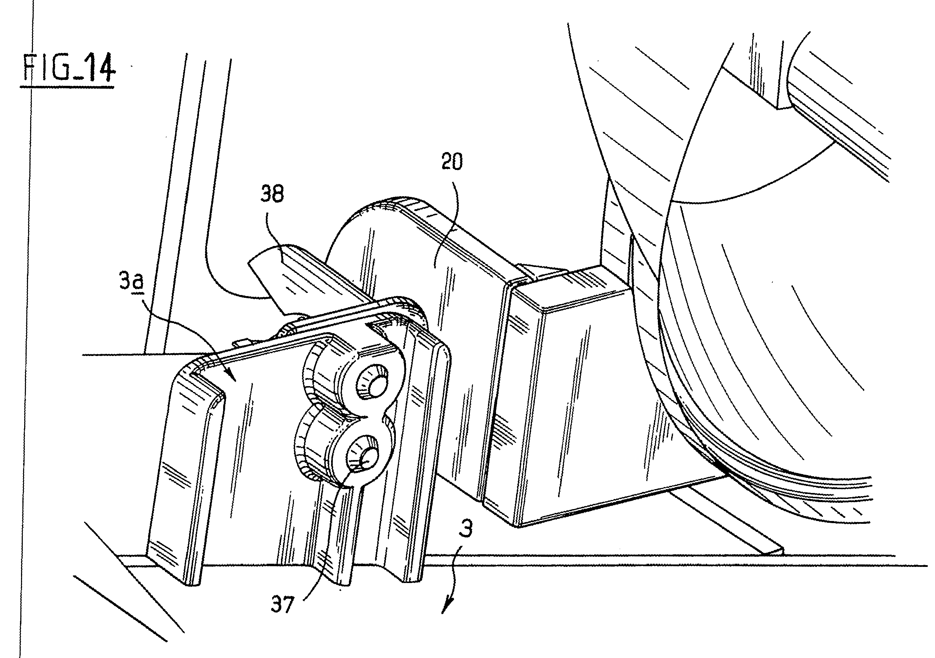

Les figures 5 à 17 représentent en détail les différentes pièces constitutives d'un mode de réalisation très voisin de celui des figures 3 et 4.

La figure 5 est une vue en perspective de la partie avant droite d'un véhicule automobile sur laquelle on voit les deux lampes d'éclairage 4 et 5 montées sur la platine 20 qui est assujettie au quart avant 3 du véhicule par un système d'encliquetage 27 dont on voit une partie sur cette figure 5.

La figure 5 montre également un bloc de mousse 28 moulé placé en dessous du bloc optique et assurant l'étanchéité du logement, également désigné cuve, contenant les lampes.

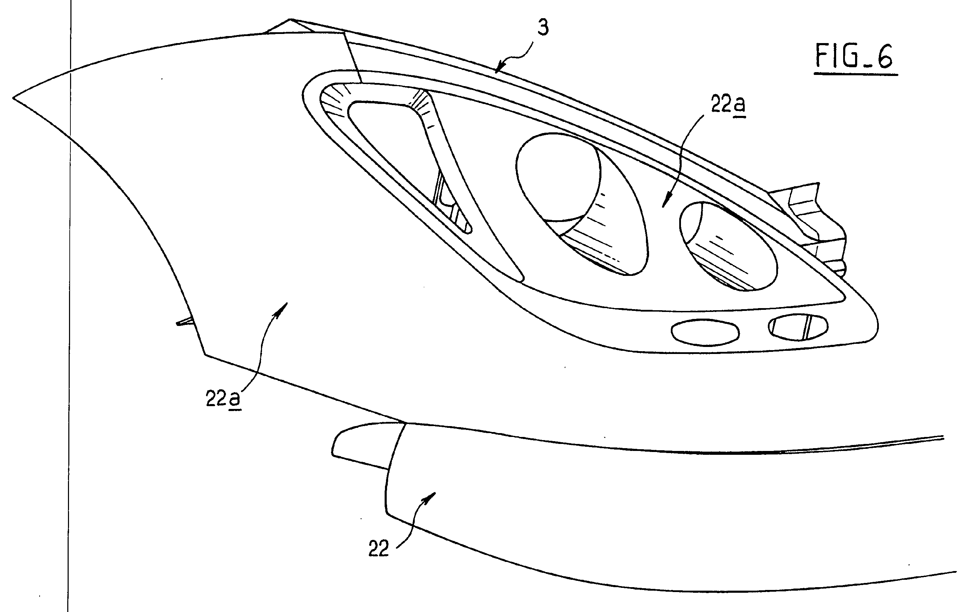

La figure 6 est une vue analogue à la figure 5 du pare-chocs 22 qui est destiné à recouvrir le bloc de mousse 28, à s'étendre autour de l'optique en constituant une partie de la carrosserie du véhicule, et à se prolonger dans le bloc optique pour venir détourer le cuvelage parabolique 26 et la face avant des deux lampes. Ainsi, la partie supérieure 22a du pare-chocs constitue un enjoliveur à l'avant des lampes.

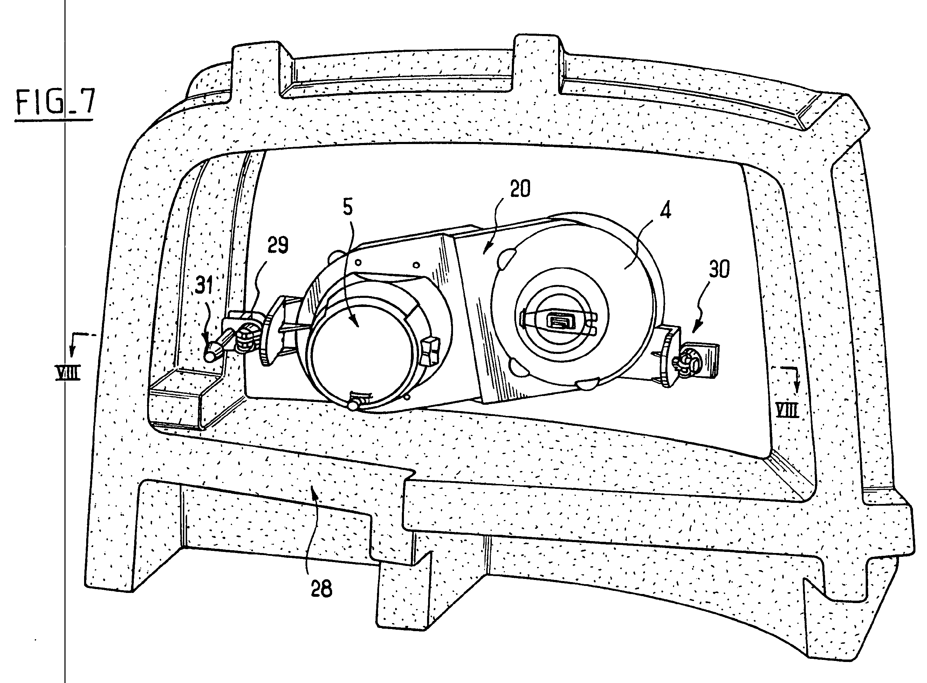

La figure 7 est une vue en perspective de l'arrière du système d'éclairage de la figure 5, abstraction faite de la structure du véhicule.

Sur cette figure, on retrouve le bloc de mousse 28 qui se loge en partie inférieure du quart avant et la platine 20 supportant les lampes 4, 5.

Sur cette figure, on voit également des fixations-rotules 29 et 30 de la platine qui constituent le système d'encliquetage 27 et sont situées à chacune des extrémités de cette platine.

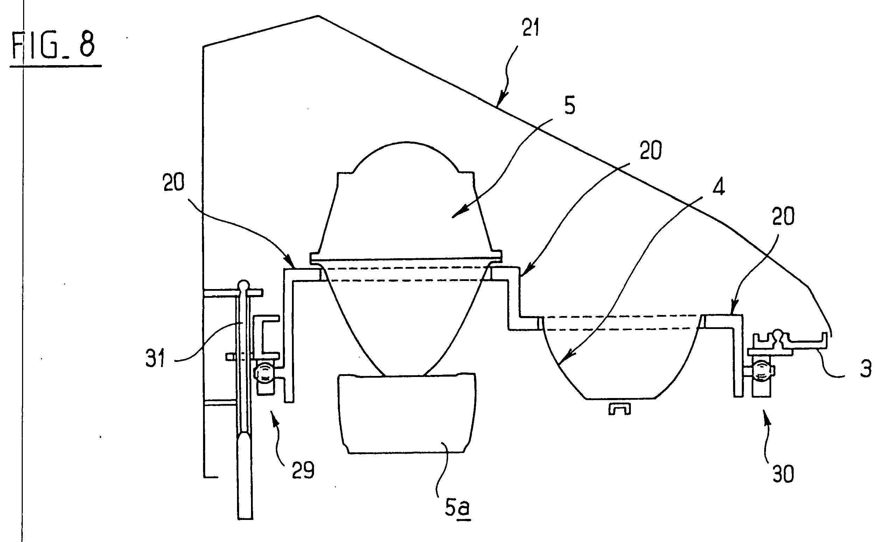

La figure 8 est une vue en coupe selon VIII-VIII de la figure 7 sur laquelle on voit notamment que, si la fixation-rotule 30 est fixe par rapport à la structure du véhicule, la fixation-rotule 29 est mobile d'avant en arrière le long d'une vis de réglage 31 qui permet de régler l'azimut de faisceaux lumineux émis par les lampes.

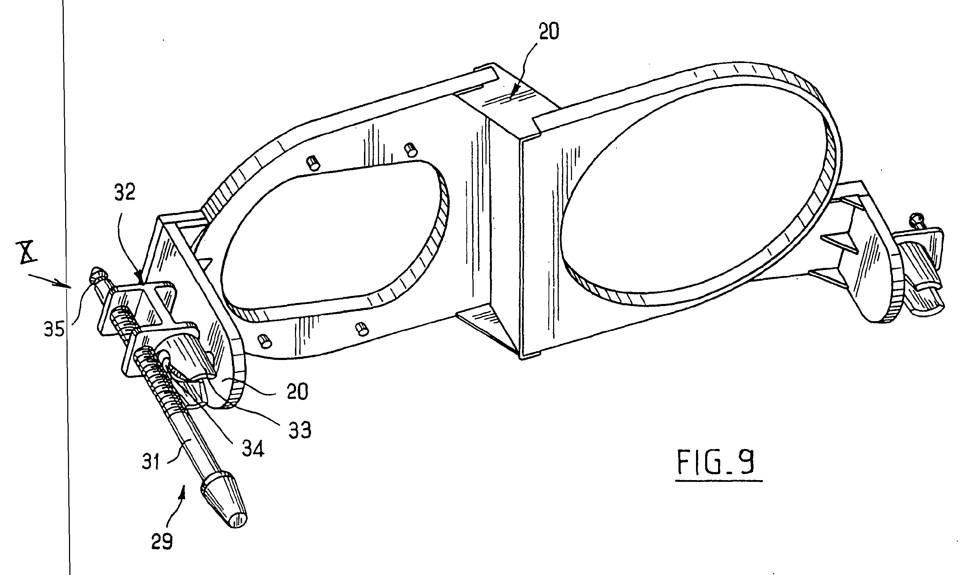

La figure 9 est une vue en perspective arrière de la platine 20 nue et de sa fixation-rotule 29 réglable par déplacement le long de la vis de réglage 31, qui comporte un filetage le long duquel un chariot de guidage 32 peut coulisser d'avant en arrière, ledit chariot supportant la partie femelle 33 de la rotule, tandis que la partie mâle34 est solidaire de la platine 20.

Les parties mâles 34 et femelle 33 de la rotule se solidarisent par encliquetage.

L'extrémité avant de la vis de réglage 31 comporte une tète d'encliquetage 35 pour sa fixation au quart-avant 3, dans un orifice d'encliquetage (non représenté).

Il est à noter que les deux systèmes d'encliquetage prévus entre, d'une part, les parties mâle et femelle de la rotule et, d'autre part, la tête 35 de la vis et le quart-avant, sont orientés de façon à permettre le recul de la platine vers l'arrière du véhicule par désencliquetage des pièces encliquetées.

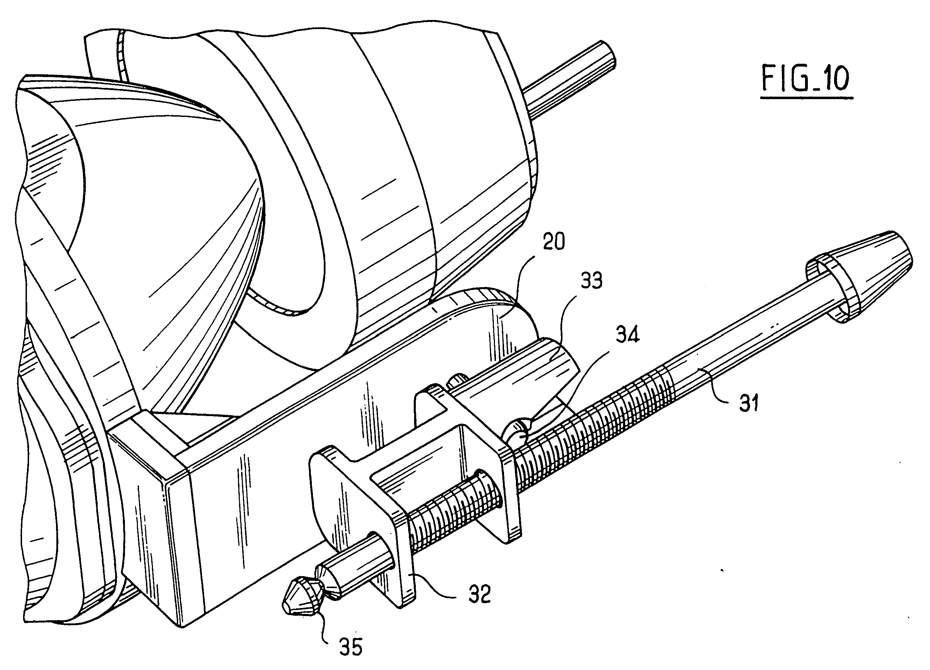

La figure 10 représente la rotule 33, 34 le chariot 32 et la vis de réglage 31 à plus grande échelle.

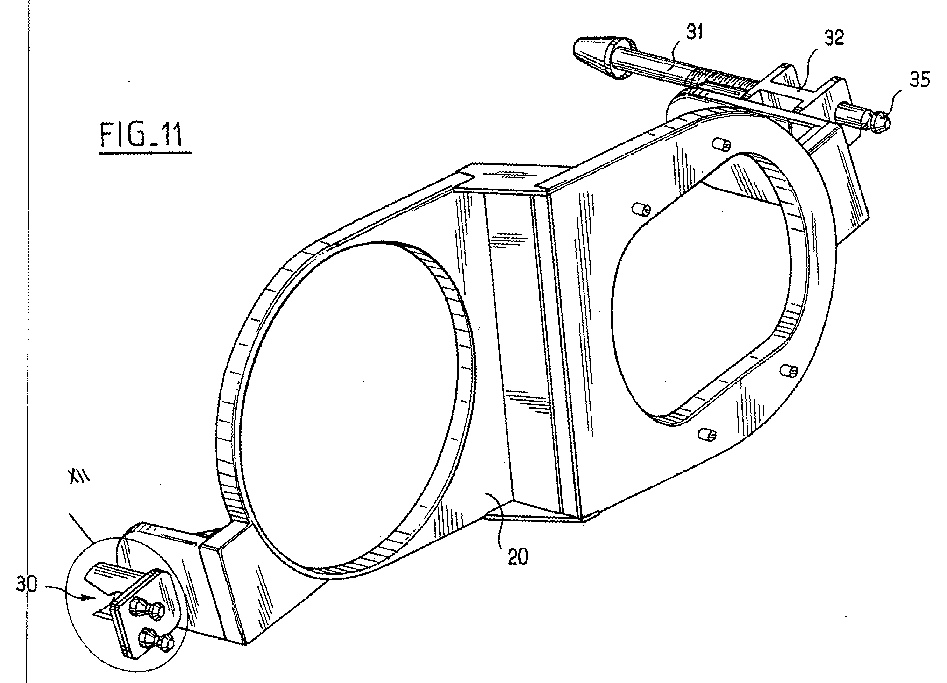

La figure 11 est une vue en perspective de l'avant de la platine nue. Sur cette figure, on voit, en plus de la fixation-rotule réglable 29, la fixation-rotule fixe 30.

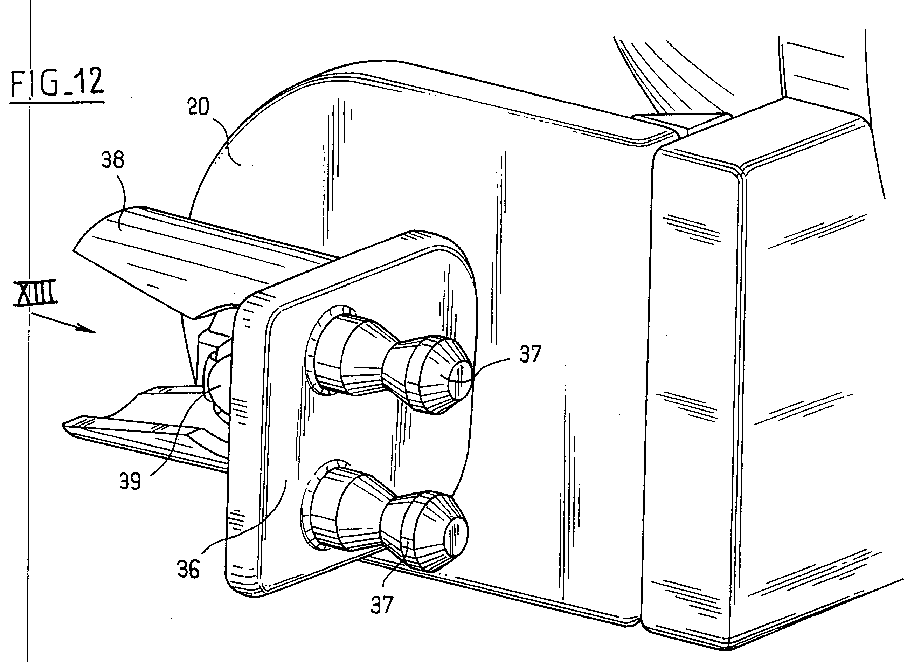

Cette fixation-rotule fixe est mieux visible sur les vues rapprochées des figures 12, 13 et 14 où l'on voit qu'un support de rotule 36 comporte deux têtes d'encliquetage ou de clipsage 37 pour sa fixation sur le quart-avant du véhicule dans des creux ménagés dans une partie 3a en saillie du quart-avant 3. Le support de rotule 36 comprend la partie femelle 38 de la rotule, encliquetable avec la partie mâle 39 qui est solidaire de la platine 20.

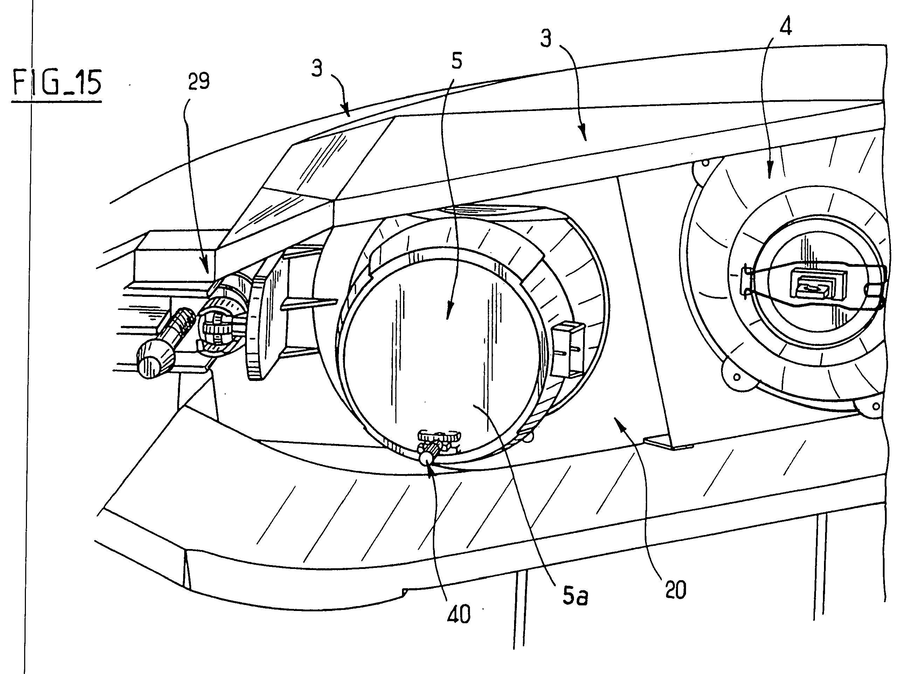

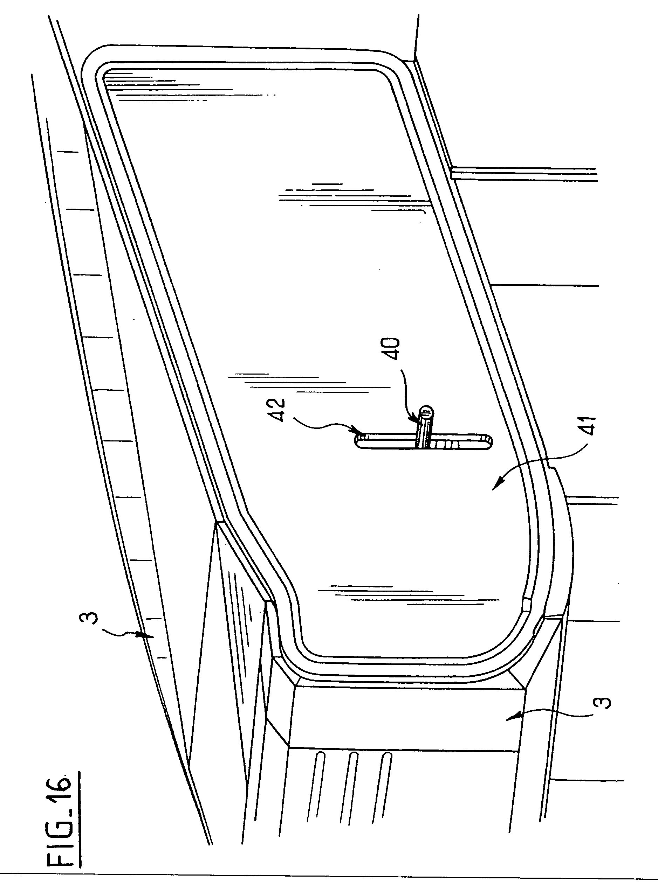

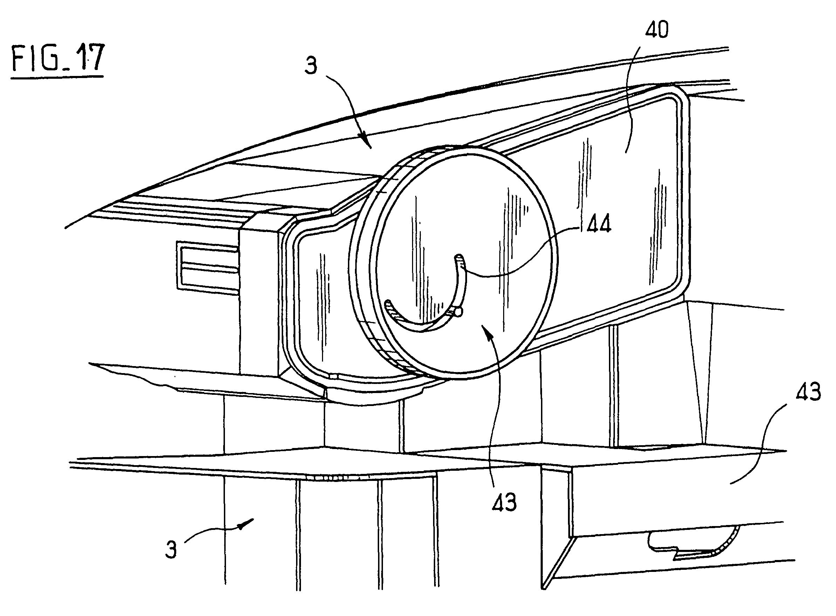

Le réglage de l'assiette du système d'éclairage s'effectue grâce à une tige 40 de réglage d'assiette solidaire du capuchon arrière 5a du lenticulaire 5, comme on le voit sur la figure 15. Cette tige de réglage 40 s'engage dans une fente de guidage verticale 42 réalisée dans le bouchon d'étanchéité arrière 41 du bloc optique (figure 16) sur lequel on rapporte une molette de réglage 43 pivotante munie d'une fente de guidage circulaire 44 dans laquelle la tige de réglage d'assiette pénètre également, comme on le voit à la figure 17. On comprend qu'en tournant la molette de réglage d'assiette 43, on fait monter ou descendre la tige de réglage d'assiette 40 et l'on modifie l'orientation de la platine autour d'un axe passant par ses deux rotules.

On remarque que les différents encliquetages prévus pour la fixation de la platine sur la structure du véhicule sont tous orientés de manière qu'en cas de choc imprimant au bloc optique une force dirigée vers l'arrière du véhicule, les différentes pièces encliquetées peuvent se séparer sans se briser.

Les systèmes de réglage décrits en référence aux figures 5 à 17 peuvent s'appliquer à tous les modes de réalisation.

La figure 18 représente un châssis analogue à celui des figures 1 et 2, à la différence près que le cuvelage réfléchissant 45 est muni d'une vitre en polycarbonate 46 qui assure une première obturation du boîtier optique.

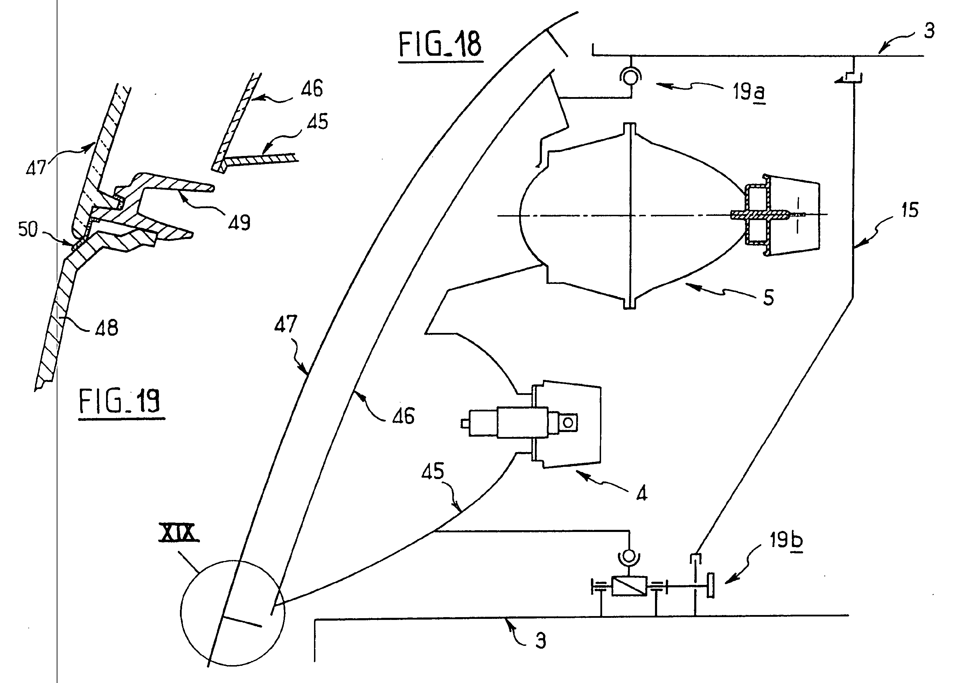

Une seconde vitre 47 est assujettie au pare-chocs 48 par encliquetage, comme on le voit sur la vue de détail de la figure 19, grâce à une pièce intermédiaire 49 collée à la périphérie de la vitre et conformée pour s'encliqueter sur le pare-chocs.

Un joint 50 sépare la vitre 47 du pare-chocs 48.

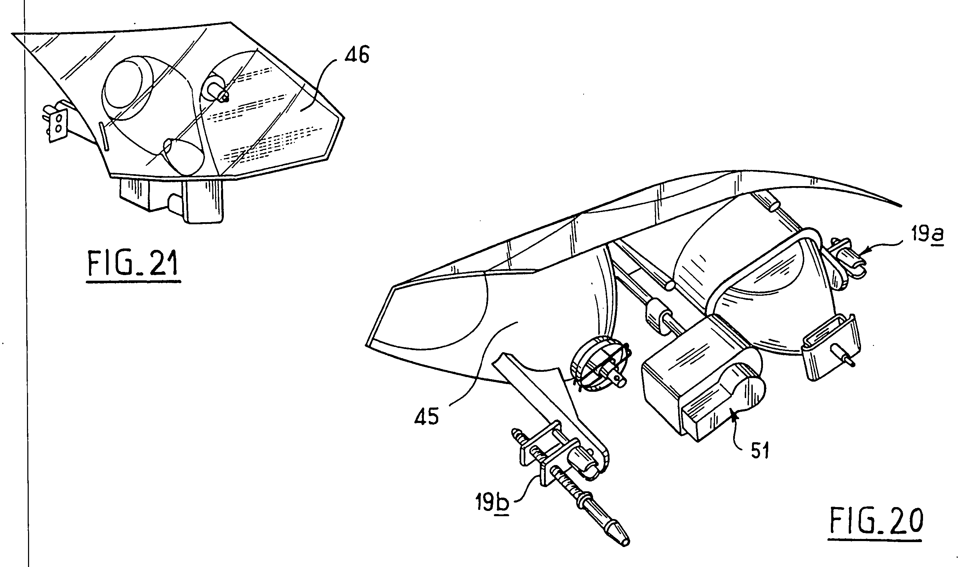

La figure 20 donne une représentation en perspective arrière du cuvelage 45 des lampes et des fixations réglables 19a et 19b. On voit également un moteur de réglage d'assiette 51.

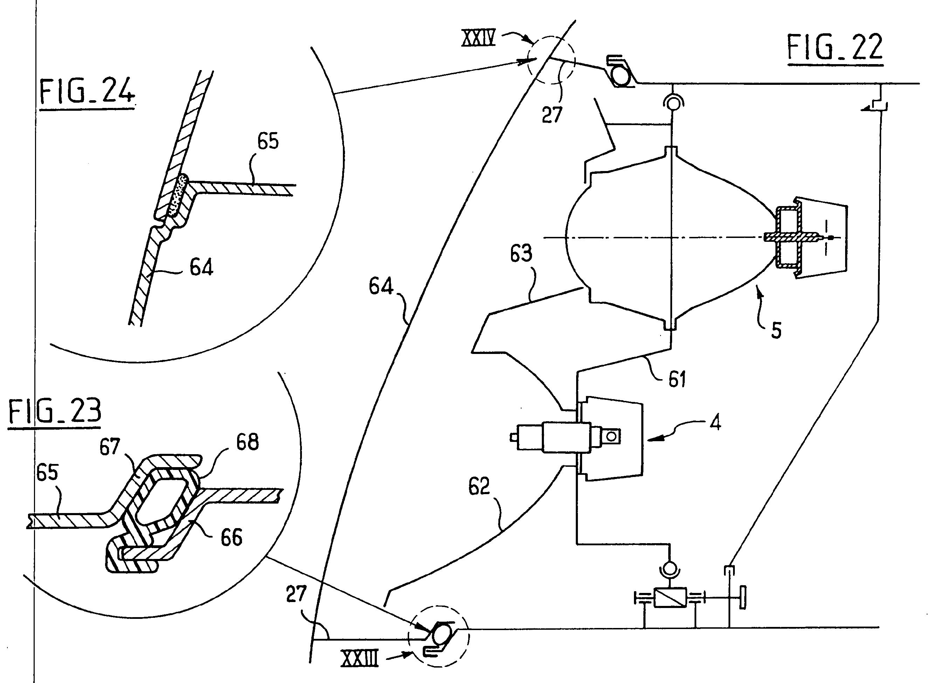

Sur la vue en perspective avant fournie par la figure 21, on voit la vitre en polycarbonate 46 collée directement sur le cuvelage 45.

La figure 22 illustre un mode de réalisation dans lequel le châssis est constitué par une platine 61.

La lampe 4 à surface parabolique complexe comporte un cuvelage parabolique 62 assujetti à la platine.

Le projecteur lenticulaire 5 est muni d'un cache périphérique 63 qui est également assujetti à la platine 61.

Une vitre de protection 64 est montée indépendamment du châssis 61 en étant collée directement sur la peau du pare-chocs, comme on le voit à la figure 34.

Pour assurer l'étanchéité de la cuve contenant le système optique, la vitre comporte une jupe 65 qui s'étend vers l'intérieur du véhicule jusqu'à proximité du bord avant 66 de la cuve, lequel bord comporte une forme complémentaire à celle de l'extrémité 67 de la jupe.

Entre ces deux formes complémentaires, on a intercalé un joint 68 à écrasement du type tube souple qui est solidarisé au bord 66 de la cuve.

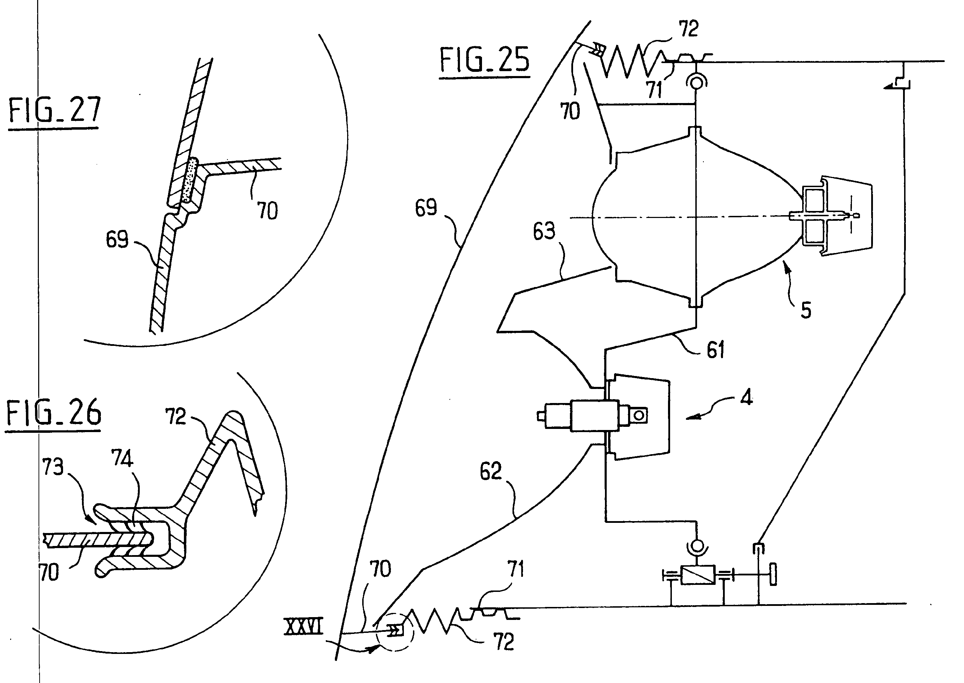

Le mode de réalisation des figures 25 à 27 ne se distingue du mode de réalisation précédent que par la vitre protectrice 69, qui comporte une jupe 70 plus courte qui ne s'étend pas jusqu'au bord avant de la cuve.

Pour réaliser l'étanchéité de la cuve, cette dernière est prolongée en direction de la vitre 69 par un soufflet 72 qui entoure le bord 71 de la cuve et s'étend jusqu'à la jupe 70, contre laquelle il prend appui grâce à une nervure périphérique 73 garnie intérieurement d'un joint 74 et dans laquelle l'extrémité de la jupe 70 vient se loger.

On réalise ainsi une parfaite étanchéité de la cuve contenant le système optique.

Il est bien entendu que les modes de réalisation qui viennent d'être décrits ne présentent aucun caractère limitatif et qu'ils pourront recevoir toute modification désirable sans sortir pour cela du cadre de l'invention telle que définie par les revendications annexées.

## Revendications

1. Système d'éclairage pour véhicule automobile comportant un châssis (14, 20, 45, 61) apte à supporter au moins une lampe d'éclairage (4, 5), un boîtier contenant le châssis et sa lampe, et une pièce de structure (3) du véhicule, apte à supporter intérieurement des organes du véhicule et extérieurement des éléments de carrosserie du véhicule, **caractérisé par le fait que** le boîtier est partie intégrante de la pièce de structure (3), laquelle comporte à cet effet un logement en forme de cuve qui peut accueillir directement le châssis et sa lampe.

2. Système d'éclairage selon la revendication 1, **caractérisé par le fait que** la pièce de structure est un quart-avant (3).

3. Système d'éclairage selon l'une quelconque des revendications 1 et 2, **caractérisé par le fait que** la pièce de structure est un noeud structurel du véhicule, en reliant par exemple un longeron supérieur, un longeron inférieur, la traverse chocs et la traverse supérieure.

4. Système d'éclairage selon l'une quelconque des revendications 1 à 3, **caractérisé par le fait que** le châssis supportant la ou les lampes est constitué par un cuvelage réfléchissant (14, 45, 62) qui concentre les rayons lumineux issus des lampes.

5. Système d'éclairage selon l'une quelconque des revendications 1 à 3, **caractérisé par le fait que** le châssis se réduit à une simple platine (20), laquelle peut éventuellement supporter un cuvelage réfléchissant (26) pour concentrer les rayons lumineux.

6. Système d'éclairage selon la revendication 5, **caractérisé par le fait que** la platine (20) est moulée d'un seul tenant.

7. Système d'éclairage selon l'une quelconque des revendications 1 à 6, **caractérisé par le fait que** le système d'éclairage comporte, entre le logement en forme de cuve et la carrosserie, ou entre le logement en forme de cuve et une vitre de protection placée devant le châssis supportant la lampe, un moyen d'étanchéité (68, 72) qui empêche les poussières, l'eau et toutes particules étrangères de pénétrer dans le logement en forme de cuve.

8. Système d'éclairage selon la revendication 7, **caractérisé par le fait que** le moyen d'étanchéité est constitué par un joint à écrasement (68), du type tube souple, positionné à la périphérie du bord avant de la cuve et s'appuyant contre la carrosserie ou contre la vitre.

9. Système d'éclairage selon l'une quelconque des revendications 7 et 8, **caractérisé par le fait que** le moyen d'étanchéité est constitué par un soufflet (72) qui enferme le bord avant du logement en forme de cuve et prolonge ce logement jusqu'à la carrosserie ou jusqu'à la vitre, contre laquelle le soufflet prend appui.

10. Système d'éclairage selon l'une quelconque des revendications 7 à 9, **caractérisé par le fait que** le logement en forme de cuve est rendu étanche par rapport à l'extérieur du véhicule grâce à un bloc de mousse moulé (28) qui empêche la pénétration de poussières, d'eau et de toutes particules étrangères tout en autorisant une circulation d'air.

11. Système d'éclairage slon la revendication 10, **caractérisé par le fait que** le bloc de mousse remplit également une fonction d'absorption d'énergie.

12. Système d'éclairage selon l'une quelconque des revendications 10 et 11, **caractérisé par le fait que** le bloc de mousse entoure le logement en forme de cuve.

13. Système d'éclairage selon l'une quelconque des revendications 1 à 12, **caractérisé par le fait que** le châssis est monté sur la pièce de structure par des fixations fusibles (19a, 19b, 29, 30) qui, en cas de choc subi par le véhicule, sont aptes à libérer le châssis pour permettre le recul de ce dernier de façon à le soustraire aux contraintes résultant du choc susceptibles de l'endommager.

14. Système d'éclairage selon la revendication 13, **caractérisé par le fait que** les fixations fusibles (19a, 19b, 29, 30) sont constituées par des moyens d'encliquetage.

15. Système d'éclairage selon l'une quelconque des revendications 1 à 14, **caractérisé par le fait que** le châssis du système d'éclairage comporte des moyens de réglage (31, 40, 41, 43) qui permettent de régler l'assiette et l'azimut des faisceaux lumineux issus des lampes.

16. Système d'éclairage selon la revendication 15, **caractérisé par le fait que** le châssis comporte deux fixations-rotules (29, 30) dont l'une est fixe, tandis que l'autre est déplaçable d'avant en arrière, ce qui permet de faire pivoter le châssis autour d'un axe vertical pour régler l'azimut des faisceaux lumineux issus des lampes, tandis que le réglage de l'assiette s'effectue par pivotement du châssis autour d'un axe sensiblement horizontal passant par ses deux rotules.

17. Système d'éclairage selon l'une quelconque des revendications 15 et 16, **caractérisé par le fait que** les parties mâles et femelles des fixations-rotules s'encliquettent les unes dans les autres.

18. Système d'éclairage selon l'une quelconque des revendications 1 à 17, **caractérisé par le fait que** le système d'éclairage comporte une vitre protectrice (16, 21, 47, 64, 69) séparée du châssis et assujettie à la carrosserie où à la pièce de structure, devant le châssis supportant les lampes.

19. Système d'éclairage selon la revendication 18, **caractérisé par le fait que** la vitre (21, 64, 69) est collée directement sur la carrosserie.

20. Système d'éclairage selon la revendication 19, **caractérisé par le fait que** la vitre (16, 47) est assujettie à la carrosserie ou à la pièce de structure par une pièce intermédiaire (17, 49) qui comporte une partie fusible qui permet à la vitre, en cas de choc, de reculer par destruction de ladite pièce intermédiaire.

21. Système d'éclairage selon la revendication 18, **caractérisé par le fait que** la vitre comporte des formes d'encliquetage qui coopèrent avec des formes correspondantes de la carrosserie et permettent l'encliquetage de la vitre sur la carrosserie.

## Patentansprüche

1. Beleuchtungssystem für ein Kraftfahrzeug, das ein Chassis, (14, 20, 45, 61), welches geeignet ist für die Aufnahme mindestens eines Leuchtmittels (4, 5), ein Gehäuse, in dem sich das Chassis und sein Leuchtmittel befinden, und ein Strukturteil (3) des Kraftfahrzeugs aufweist, das innen für die Aufnahme von Organen des Kraftfahrzeugs und außen für die Aufnahme von Karosserieelementen des Kraftfahrzeugs ausgelegt ist, **dadurch gekennzeichnet, dass** das Gehäuse ein integraler Bestandteil des Strukturteils (3) ist, das zu diesem Zweck eine Aufnahme in Form eines Hohlraums aufweist, welche direkt das Chassis und sein Leuchtmittel aufnehmen kann.

2. Beleuchtungssystem nach Patentanspruch 1, **dadurch gekennzeichnet, dass** das Strukturteil ein Vorder-Viertel (3) ist.

3. Beleuchtungssystem nach einem beliebigen der Patentansprüche 1 und 2, **dadurch gekennzeichnet, dass** das Strukturteil einen Strukturknotenteil des Kraftfahrzeugs ist und beispielsweise einen oberen Längsträger, einen unteren Längsträger, die Stoßtraverse und die obere Traverse verbindet.

4. Beleuchtungssystem nach einem beliebigen der Patentansprüche 1 bis 3, **dadurch gekennzeichnet, dass** das mindestens ein Leuchtmittel tragende Chassis gebildet ist von einer Reflektorwanne (14, 45, 62), welche die von den Leuchtmitteln ausgehenden Lichtstrahlen bündelt.

5. Beleuchtungssystem nach einem beliebigen der Patentansprüche 1 bis 3, **dadurch gekennzeichnet, dass** das Chassis sich auf eine einfache Platine (20) reduziert, welche ggf. eine Reflektorwanne (26) für das Bündeln der Lichtstrahlen trägt.

6. Beleuchtungssystem nach Patentanspruch 5, **dadurch gekennzeichnet, dass** die Platine (20) in einem Stück im Gussverfahren gefertigt ist.

7. Beleuchtungssystem nach einem beliebigen der Patentansprüche 1 bis 6, **dadurch gekennzeichnet, dass** das Beleuchtungssystem zwischen der Aufnahme in Form eines Hohlraums und der Karosserie oder zwischen der Aufnahme in Form eines Hohlraums und einer schützenden Scheibe, die vor dem den Beleuchtungskörper tragenden Chassis angeordnet ist, ein Dichtmittel (68, 72) aufweist, welches das Eindringen von Staub, Wasser und allen Fremdpartikeln in die Aufnahme in Form eines Hohlraums verhindert.

8. Beleuchtungssystem nach Patentanspruch 7, **dadurch gekennzeichnet, dass** das Dichtmittel durch eine Quetschdichtung (68) vom Typ eines weichen Schlauchs gebildet ist, der an der Peripherie des vorderen Randes des Hohlraums angeordnet ist und sich gegen die Karosserie oder gegen die Scheibe abstützt.

9. Beleuchtungssystem nach einem beliebigen der Patentansprüche 7 und 8, **dadurch gekennzeichnet**, das das Dichtmittel gebildet ist von einem Balgen (72), der den vorderen Rand der Aufnahme in Form eines Hohlraums umschließt und diese Aufnahme bis zur Karosserie oder bis zur Scheibe verlängert, wogegen der Balgen sich abstützt.

10. Beleuchtungssystem nach einem beliebigen der Patentansprüche 7 bis 9, **dadurch gekennzeichnet, dass** die Aufnahme in Form des Hohlraums dicht gegenüber dem Außenbereich des Kraftfahrzeugs ausgestaltet ist aufgrund eines formgegossenen Schaums (28), das den Eindringen von Staub, Wasser oder allen Fremdpartikeln verhindert, dabei aber eine Zirkulation von Luft erlaubt.

11. Beleuchtungssystem nach Patentanspruch 10, **dadurch gekennzeichnet, dass** der Schaumstoffblock auch die Funktion eines Energieabsorbers erfüllt.

12. Beleuchtungssystem nach einem beliebigen der Patentansprüche 10 und 11, **dadurch gekennzeichnet, dass** der Schaumstoffblock die Aufnahme in Form eines Hohlraums umgibt.

13. Beleuchtungssystem nach einem beliebigen der Patentansprüche 1 bis 12, **dadurch gekennzeichnet, dass** das Chassis auf dem Strukturteil mittels schmelzbarer bzw. zerstörbarer Befestigungen (19a, 19b, 29, 30) befestigt ist, welche im Falle eines auf das Kraftfahrzeug einwirkenden Schocks das Chassis freigeben können, damit dieses zurückverlagert werden kann, so dass es den resultierenden Belastungen aufgrund des Schocks, welche es beschädigen könnten, entweichen kann.

14. Beleuchtungssystem nach Patentanspruch 13, **dadurch gekennzeichnet, dass** die schmelzbaren bzw. zerstörbaren Befestigungen (19a, 19b, 29, 30) gebildet sind von Einrastmitteln.

15. Beleuchtungssystem nach einem beliebigen der Patentansprüche 1 bis 14, **dadurch gekennzeichnet, dass** das Chassis des Beleuchtungssystems Stellmittel (31, 40, 41, 43) aufweist, die es ermöglichen, die Trimmung und den Azimut des von den Leuchtmitteln ausgehenden Lichtbündels einzujustieren.

16. Beleuchtungssystem nach Patentanspruch 15, **dadurch gekennzeichnet, dass** das Chassis zwei Gelenkbefestigungen (29, 30) aufweist, von denen eine fixiert ist, während die andere nach hinten und nach vorn versetzbar ist, wodurch es möglich ist, das Chassis um eine vertikale Achse zu verschwenken, um den Azimut des Lichtbündels, das von den Leuchtmitteln ausgeht, einzustellen, während die Einstellung der Trimmung durch Schwenken des Chassis um eine im Wesentlichen horizontale Achse erfolgt, die durch die beiden Gelenke hindurchläuft.

17. Beleuchtungssystem nach einem beliebigen der Patentansprüche 15 und 16, **dadurch gekennzeichnet, dass** die männlichen Teile und die weiblichen Teile der Gelenkbefestigungen ineinander einklipsbar sind.

18. Beleuchtungssystem nach einem beliebigen der Patentansprüche 1 bis 17, **dadurch gekennzeichnet, dass** das Beleuchtungssystem eine schützende Scheibe (16, 21, 47, 64, 69) aufweist, die vom Chassis separat ist und mit der Karosserie oder mit dem Strukturteil vor dem die Leuchtmittel aufnehmenden Chassis verbunden ist.

19. Beleuchtungssystem nach Patentanspruche 18, **dadurch gekennzeichnet, dass** die Scheibe (21, 64, 69) direkt auf die Karosserie geklebt ist.

20. Beleuchtungssystem nach Patentanspruch 19, **dadurch gekennzeichnet, dass** die Scheibe (16, 47) mit der Karosserie oder mit dem Strukturteil durch ein Zwischenstück (17, 49) verbunden ist, welches einen schmelzbaren bzw. zerstörbaren Bereich aufweist, der es der Scheibe ermöglicht, im Falle eines Schocks, sich unter Zerstörung des genannten Zwischenstücks zurückzubewegen.

21. Beleuchtungssystem nach Patentanspruch 18, **dadurch gekennzeichnet, dass** die Scheibe klipsbare Formteile aufweist, die mit entsprechenden Formteilen der Karosserie zusammenwirken und ein Einrasten der Scheibe auf der Karosserie ermöglichen.

## Claims

1. A lighting system for a motor vehicle, said lighting system comprising a frame (14, 20, 45, 61) suitable for supporting at least one lighting lamp (4, 5), a housing containing the frame and its lamp, and a structural piece (3) of the vehicle, which piece is suitable internally for supporting parts of the vehicle, and externally for supporting elements of the bodywork of the vehicle, said lighting system being **characterized by** the fact that the housing is an integral part of the structural piece (3), which, for this purpose, is provided with a bowl-shaped recess that can receive the frame and its lamp directly.

2. A lighting system according to claim 1, **characterized by** the fact that the structural piece is a front quarter [quart-avant] (3).

3. A lighting system according to claim 1 or 2, **characterized by** the fact that the structural piece is a structural node of the vehicle, e.g. a node interconnecting an upper longitudinal member, a lower longitudinal member, the bumper crosspiece, and the upper crosspiece.

4. A lighting system according to any one of claims 1 to 3, **characterized by** the fact that the frame supporting the lamp(s) is constituted by a reflective dish (14, 45, 62) which concentrates light rays coming from the lamps.

5. A lighting system according to any one of claims 1 to 3, **characterized by** the fact that the frame is reduced to a single plate (20) which may optionally support a reflective dish (26) for concentrating the light rays.

6. A lighting system according to claim 5, **characterized by** the fact that the plate (20) is integrally molded.

7. A lighting system according to any one of claims 1 to 6, **characterized by** the fact that, between the bowl-shaped recess and the bodywork, or between the bowl-shaped recess and a protective cover glass placed in front of the frame supporting the lamp, the lighting system includes sealing means (68, 72) which prevent dust, water, and any foreign particles from penetrating into the bowl-shaped recess.

8. A lighting system according to claim 7, **characterized by** the fact that the sealing means are constituted by a compressible gasket (68) of the flexible tube type positioned at the periphery of the front edge of the bowl, and bearing against the bodywork or against the cover glass.

9. A lighting system according to claim 7 or 8, **characterized by** the fact that the sealing means are constituted by a bellows (72) which encloses the front edge of the bowl-shaped recess and extends said recess to the bodywork or to the cover glass, against which the bellows abuts.

10. A lighting system according to any one of claims 7 to 9, **characterized by** the fact that the bowl-shaped recess is sealed relative to the outside of the vehicle by means of a molded block of foam (28) which prevents dust, water, and foreign particles from penetrating, while allowing air to flow through.

11. A lighting system according to claim 10, **characterized by** the fact that the block of foam also provides an energy-absorption function.

12. A lighting system according to claim 10 or 11, **characterized by** the fact that the block of foam surrounds the bowl-shaped recess.

13. A lighting system according to any one of claims 1 to 12, **characterized by** the fact that the frame is mounted on a structural piece via self-releasing fastenings (19a, 19b, 29, 30) which, in the event that the vehicle is subjected to an impact, are suitable for releasing the frame so as to allow it to retreat, thereby protecting it from the stresses resulting from the impact and that could damage it.

14. A lighting system according to claim 13, **characterized by** the fact that the self-releasing fastenings (19a, 19b, 29, 30) are constituted by snap-fastening means.

15. A lighting system according to any one of claims 1 to 14, **characterized by** the fact that the frame of the lighting system is provided with setting means (31, 40, 41, 43) which make it possible to set the elevation and the azimuth of the light beams coming from the lamps.

16. A lighting system according to claim 15, **characterized by** the fact that the frame is provided with two ball-fastenings (29, 30), one of which is fixed, while the other is mounted to move forwards and backwards, thereby enabling the frame to be pivoted about a vertical axis to set the azimuth of the light beams coming from the lamps, while the elevation can be set by pivoting the frame about a substantially horizontal axis passing through both of its ball-fastenings.

17. A lighting system according to claim 15 or 16, **characterized by** the fact that the male and female portions of the ball-fastenings snap-fasten together.

18. A lighting system according to any one of claims 1 to 17, **characterized by** the fact that the lighting system includes a protective cover glass (16, 21, 47, 64, 69) separated from the frame and secured to the bodywork or to the structural piece, in front of the frame supporting the lamps.

19. A lighting system according to claim 18, **characterized by** the fact that the cover glass (21, 64, 69) is glued directly to the bodywork.

20. A lighting system according to claim 19, **characterized by** the fact that the cover glass (16, 47) is secured to the bodywork or to the structural piece via an intermediate piece (17, 49) which includes a self-releasing portion which makes it possible, in the event of impact, for the cover glass to retreat by destroying said intermediate piece.

21. A lighting system according to claim 18, **characterized by** the fact that the cover glass is provided with snap-fastening shapes which co-operate with corresponding shapes on the bodywork, enabling the cover glass to be snap-fastened to the bodywork.
